# EUROPEAN PATENT APPLICATION

(11) **EP 0 791 629 A2**
(43) Date of publication of application: **27.08.1997**
(21) Application number: 97300700.8
(22) Date of filing: 04.02.1997
(51) Int. Cl.: C08L 23/34, C08L 51/04

(54) **Thermoplastic elastomer composition**

(30) Priority: 20.02.1996 US 604040
(71) Applicant: GENERAL ELECTRIC COMPANY, Schenectady, NY 12345 (US)
(72) Inventor: Avakian, Roger W., Parkersburg, West Virginia 26101 (US); Wypart, Roman W., Parkersburg, West Virginia 26101 (US)
(74) Representative: Szary, Anne Catherine, Dr.

(57) **Abstract**

A thermoplastic elastomer composition that exhibits improved elastomeric properties includes a chlorinated polyolefin resin or a chlorosulfonated polyolefin resin and a high rubber graft copolymer. The high rubber graft copolymer includes from 60 to 95 percent by weight of a rubbery polymeric substrate and from 5 to 40 percent by weight of a rigid polymeric superstrate.

## Description

### Field of the Invention

The present invention relates to thermoplastic elastomer compositions and, more particularly, to thermoplastic chlorinated polyolefin resins that exhibit improved elastomeric properties.

### Background of the Invention

Thermoplastic Elastomer (TPE) consumption has grown significantly during the past thirty years. The consumption of TPEs has grown because, as compared to vulcanized rubber, TPEs provide adequate performance at lower cost Unlike vulcanized rubbers, TPEs can be melt processed, thereby allowing the use of traditional thermoplastic processing equipment and allowing reprocessing production scrap. TPEs based on copolyester, polyamides and polyurethanes are typically used in high performance applications. Use of lower cost TPEs based on polyolefins, including chlorinated polyolefins, styrenic block copolymers or PVC are typically used for less demanding applications, e.g., chlorinated polyethylene is used mostly in PVC-related applications and rubber compounding.

There is a need for low cost chlorinated polyolefin compositions that exhibit improved elastomeric properties for use in higher performance applications.

### Summary of the Invention

The present invention is directed to a thermoplastic elastomer composition that comprises:
from 10 to 90 percent by weight of a thermoplastic resin comprising one or more chlorinated thermoplastic resins selected from chlorinated polyolefin resins and chlorosulfonated polyolefin resins; and
from 10 to 90 percent by weight of one or more high rubber graft copolymers selected from:
   (1) graft copolymer A, said graft copolymer A comprising:
      (a)(i) from 60 percent by weight to 95 percent by weight of a rubbery polymeric substrate having a glass transition temperature of less than 0°C and comprising repeating units derived from one or more conjugated diene monomers; and
      (a)(ii) from 5 percent by weight to 40 percent by weight of a rigid polymeric superstrate having a glass transition temperature of greater than or equal to 0 °C and comprising repeating units derived from one or more (C₁-C₁₂)alkyl (meth)acrylate monomers, wherein at least a portion of the rigid polymeric superstrate is grafted to the rubbery polymeric substrate; or
   (2) graft copolymer B, said graft copolymer B comprising:
      (b)(i) from 60 percent by weight to 95 percent by weight of a rubbery polymeric substrate having a glass transition temperature of less than 0°C and having repeating units derived from one or more (C₁-C₁₂)alkyl acrylate monomers; and
      (b)(ii) from 5 percent by weight to 40 percent by weight of a rigid polymeric superstrate having a glass transition temperature of greater than or equal to 0 °C and comprising repeating units derived from one or more monomers selected from the group consisting of (C₁-C₁₂)alkyl (meth)acrylate monomers, vinyl aromatic monomers and monoethylenically unsaturated nitrile monomers, wherein at least a portion of the rigid polymeric superstrate is grafted to the rubbery polymeric substrate.

The thermoplastic elastomer composition of the present invention exhibits improved properties such as good strain recovery, improved tensile and tear strength, increased abrasion resistance and enhanced paintability over CPE alone.

### Detailed Description of the Invention

In a preferred embodiment, the thermoplastic elastomer composition of the present invention comprises from 20 to 80 wt%, more preferably from 30 to 80 wt%, of the chlorinated polyolefin resin and from 20 to 80 wt%, more preferably from 20 to 70 wt%, of the graft copolvmer.

### A. Chlorinated Polyolefin Resin

Suitable chlorinated resins include, e.g., chlorinated or chlorosulfonated embodiments of polyolefin homopolymer resins such as, e.g., chlorinated polyethylene, chlorosulfonated polyethylene, chlorinated polypropylene, chlorosulfonated polypropylene, chlorinated polyisobutylene, chlorosulfonated polyisobutylene as well as chlorinated or chlorosulfonated embodiments of polyolefin copolymers such as ,e.g., chlorinated poly(ethylene-propylene), chlorinated poly(propylene-butene), chlorosulfonated poly(ethylene-octene), chlorinated poly(ethylene-vinyl acetate), chlorinated poly(ethylene-alkyl (meth)acrylate).

In a preferred embodiment, the chlorinated resin has a weight average molecular weight of from 30,000 to 1,500,000, more preferably from 50,000 to 500,000 an even more preferably, from 100,000 to 300,000.

In a highly preferred embodiment, the chlorinated resin is a chlorinated polyolefin resin or chlorosulfonated polyolefin resin that has a chlorine content of from 5 to 55 wt% chlorine, based on the total weight of resin.

In a preferred embodiment, the chlorinate thermoplastic resin is a chlorinated polyolefin resin, more preferably a chlorinated polyethylene resin.

Suitable chlorinated resins as well as methods for making such resins are known in the art and such resins are commercially available, e.g., TYRIN™ 3615 chlorinated polyethylene resin from The Dow Chemical Company

### B. Graft Copolymer

In a preferred embodiment, the graft copolymer comprises from 60 wt% to 90 wt% and even more preferably, from 65 wt% to 80 wt% of the rubbery polymeric substrate and from 10 wt% to 40 wt% and even more preferably, from 20 wt% to 80 wt%, of the rigid polymeric superstrate.

In a preferred embodiment, the rubbery polymeric substrate has a glass transition temperature ("T_{g}") of less than -20°C. As referred herein, the T_{g} of a polymer is the T_{g} value of polymer as measured by differential scanning calorimetry (heating rate 20°C/ minute, T_{g} value determined at inflection point).

Suitable conjugated diene monomers include, e.g., 1,3-butadiene, isoprene, 1,3-heptadiene, methyl-1,3-pentadiene, 2,3-dimethylbutadiene, 2-ethyl-1,3-pentadiene, 1,3-hexadiene, 2, 4, hexadiene, dichlorobutadiene, bromobutadiene and dibromobutadiene as well as mixtures of conjugated diene monomers.

As used herein, the term "(C₁-C₁₂)alkyl" means a straight or branched alkyl substituent group having from 1 to 12 carbon atoms per group and includes, e.g., methyl, ethyl, n-butyl, sec-butyl, t-butyl, n-propyl, iso-propyl, pentyl, hexyl, heptyl, octyl, nonyl, decyl undecyl and dodecyl. Suitable (C₁-C₁₂)alkyl acrylates include, e.g., ethyl acrylate, butyl acrylate, iso-pentyl acrylate, n-hexyl acrylate.

In a preferred embodiment, the rubbery polymeric substrate comprises repeating units derived from one or more vinyl aromatic monomers. Suitable vinyl aromatic monomers include, e.g., styrene and substituted styrenes having one or more alkyl, alkoxyl, hydroxyl or halo substituent group attached to the aromatic ring, including, e.g., α-methyl styrene, vinyl toluene, vinyl xylene, trimethyl styrene, butyl styrene, chlorostyrene, dichlorostyrene, bromostyrene, p-hydroxystyrene, methoxystyrene; and, vinyl-substituted condensed aromatic ring structures, such as, e.g., vinyl napthalene, vinyl anthracene; as well as mixtures of vinyl aromatic monomers. In a more highly preferred embodiment, the rubbery polymeric substrate comprises up to 40 wt% repeating units derived from one or more vinyl aromatic monomers.

In a preferred embodiment, the rubbery polymeric substrate comprises repeating units derived from one or more monoethylenically unsaturated nitrile monomers. As used herein, the term "monoethylenically unsaturated nitrile monomer" means an acyclic organic compound that includes a single nitrile group per molecule and a single site of ethylenic unsaturation per molecule such as, e.g., acrylonitrile, methacrylonitrile, α-chloroacrylonitrile. In a more highly preferred embodiment, the rubbery polymeric substrate comprises up to 40 wt% repeating units derived from one or more monoethylenically unsaturated nitrile monomers.

In a preferred embodiment, the rubbery polymeric substrate comprises from 30 to 90 wt% repeating units derived from one or more conjugated diene monomers and from 10 to 70 wt% repeating units derived from one or more monomers selected from vinyl aromatic monomers and monoethylenically unsaturated nitrile monomers.

The rubbery polymeric substrate may, optionally, include a minor amount, e.g., up to 5 wt%, of repeating units derived from a polyethylenically unsaturated "crosslinking" monomer, e.g., butylene diacrylate, divinyl benzene, butene diol dimethacrylate, trimethylolpropane tri(meth)acrylate. As used herein, the term "polyethylenically unsaturated" means having two or more sites of ethylenic unsaturation per molecule.

The rubbery polymeric may, particularly in those embodiments wherein the rubbery substrate has repeating units derived from alkyl (meth)acrylate monomers, include a minor amount, e.g., up to 3 wt% of repeating units derived from a polyethylenically unsaturated "graftlinking" monomer, e.g., allyl methacrylate, diallyl maleate, triallyl cyanurate, wherein the sites of ethylenic unsaturation have substantially different reactivities from the monoethylenically unsaturated monomers from which the respective substrate or superstrate is derived.

In a first highly preferred embodiment, the rubbery polymeric substrate comprises repeating units derived from one or more conjugated diene monomers such as, e.g., a substantially homopolymeric polybutadiene substrate.

In a second highly preferred embodiment, the rubbery polymeric substrate is a rubbery copolymer that comprises repeating units derived from one or more conjugated diene monomers and one or more copolymerizable comonomers selected from vinyl aromatic monomers and monoethylenically unsaturated nitrile monomers. Suitable rubbery copolymers include, e.g., styrene-butadiene rubber, styrene-butadiene-acrylonitrile rubber and butadiene-acrylonitrile rubber.

In a third highly preferred embodiment, the rubbery polymeric substrate comprises repeating units derived from one or more (C₁-C₁₂)alkyl acrylate monomers. In a more highly preferred embodiment, the rubbery polymeric substrate comprises repeating units derived one or more monomers selected from ethyl acrylate, butyl acrylate and n-hexyl acrylate.

Suitable rubbery polymeric substrates are made by known processes, e.g., aqueous emulsion polymerization and mass polymerization.

In a preferred embodiment, the rubbery polymeric substrate is made by aqueous emulsion polymerization in the presence of a free radical initiator, e.g., an organic peroxide or persulfate initiator or a redox initiator system, and, optionally, a chain transfer agent, e.g., an alkyl mercaptan. The emulsion polymerized rubbery polymeric substrate is made in particulate form and has a weight average particle size of 50 to 1000 nanometers (nm), more preferably, of from 50 to 600 nm, as measured by light transmission. The rubbery polymeric substrate may exhibit a unimodal particle size distribution or a multimodal distribution, e.g., a bimodal distribution. An exemplary bimodal distribution is one having from 50 to 80 wt% particles having particle sizes within a range of from, e.g., 80 to 180 nm, and 20 to 50 wt% having particle sizes within a range of from, e.g., from 250 to 1000 nm.

In an alternative preferred embodiment wherein the rubbery polymeric substrate is made by mass polymerization, the rubbery polymeric substrate is made in particulate form and has a weight average particle size of from 50 to 1000 nm, more preferably, 50 to 500 nm.

The rigid polymeric superstrate includes repeating units derived from one or more monomers selected from the group consisting of (C₁-C₁₂)alkyl (meth)acrylate monomers, vinyl aromatic monomers and monoethylenically unsaturated nitrile monomers. Suitable vinyl aromatic monomers and monoethylenically unsaturated nitrile monomers are set forth above.

As used herein, the terminology "(C₁-C₁₂)alkyl (meth)acrylate monomers" refers collectively to acrylate monomers and methacrylate monomers. Suitable (C₁-C₁₂)alkyl (meth)acrylate monomers include the acrylate monomers disclosed above and their methacrylate analogs, such as, e.g., methyl methacrylate, ethyl methacrylate, propyl methacrylate, isopropyl methacrylate, butyl methacrylate, hexyl methacrylate, decyl methacrylate.

In a highly preferred embodiment, the rigid polymeric superstrate comprises greater than 50 wt% repeating units derived from one or more (C₁-C₁₂)alkyl (meth)acrylate monomers, more preferably from one or more monomers selected from methyl methacrylate, ethyl methacrylate, propyl methacrylate, isopropyl methacrylate and butyl methacrylate.

In an alternative highly preferred embodiment, the superstrate comprises repeating units derived from one or more monomers selected from styrene, ∝-methyl styrene and acrylonitrile. In a more preferred embodiment, the superstrate comprises from 60 to 90 wt% repeating units derived from styrene and from 10 to 49 wt% repeating units derived from acrylonitrile.

The rigid polymeric superstrate may, optionally, include a minor amount, e.g., up to 3 wt%, more preferably up to 1.5 wt%, of repeating units derived from one or more of the polyethylenically crosslinking monomers discussed above.

The rubbery substrate and the rigid superstrate may, optionally, each independently include minor amounts, e.g., up to 15 wt% of the respective substrate or superstrate, of repeating units derived from one or more other copolymerizable ethylenically unsaturated monomers, provided that the respective substrate and superstrate T_{g} limitations are satisfied. Suitable monoethylenically unsaturated monomers that are copolymerizable with the above described monomers include, e.g., monoethylenically unsaturated carboxylic acids such as, e.g., acrylic acid, methacrylic acid, itaconic acid; hydroxy(C₁-C₁₂)alkyl (meth)acrylate monomers such as, e.g., hydroxyethyl methacrylate; (C₄-C₁₂)cycloalkyl (meth)acrylate monomers such as e.g., cyclohexyl methacrylate; (meth)acrylamide monomers such as e.g., acrylamide and methacrylamide; vinyl esters such as, e.g., vinyl acetate and vinyl propionate. As used herein, the term "(C₄-C₁₂)cycloalkyl" means a cyclic alkyl substituent group having from 4 to 12 carbon atoms per group and the term "(meth)acrylamide" refers collectively to acrylamides and methacrylamides.

The graft copolymer is made according to known processes, e.g., by polymerizing one or more monomers selected to provide a rigid polymeric superstrate having the desired T_{g} in the presence of particles of the rubbery polymeric substrate under conditions such that at least a portion of the rigid polymeric superstrate is chemically grafted to the rubbery polymeric substrate by covalent bonds. In a preferred embodiment, the monomers are polymerized by an aqueous emulsion or by an aqueous suspension polymerization reaction in the presence of the substrate particles and a polymerization initiator system, e.g., a thermal or redox initiator system wherein at least a portion of the polymerizing chains of the superstrate are chemically bonded, i.e., "grafted" to the substrate via reaction with unsaturated sites in the substrate. The unsaturated sites in the substrate are, e.g., residual unsaturated sites in repeating units derived from a conjugated diene or residual unsaturated sites in repeating units derived from a graftlinking monomer. In a preferred embodiment, greater than or equal to 30 wt%, preferably greater than or equal to 60 wt%, of the rigid polymeric superstrate is chemically grafted to the rubbery polymeric substrate and less than 70 wt%, preferably less than 40 wt%, of the rigid polymeric superstrate remains non-grafted.

The superstrate may be polymerized in one step, e.g., from a suitable monomer or mixture of monomers, or built up of one or more separately polymerized rigid phases of differing composition, e.g., methyl methacrylate phase and a separately polymerized styrene phase.

In a first preferred embodiment, the rubbery substrate comprises repeating units derived from one or more (C₁-C₁₂)alkyl acrylate monomers and the superstrate comprises repeating units derived from one or more monomers selected from vinyl aromatic monomers and nitrile monomers, such as e.g., an acrylonitrile-styrene-acrylate ("ASA") graft copolymer. Suitable ASA-tvpe graft copolymers are commercially available, e.g., BLENDEX™ 980 modifiers from GE Specialty Chemicals, Inc.

In a second preferred embodiment, the substrate comprises repeating units derived from one or more (C₁-C₁₂)alkyl acrylate monomers and the superstrate comprises repeating units derived from one or more (C₁-C₁₂)alkyl (meth)acrylate monomers, e.g., an acrylic "core-shell" graft copolymer. Suitable acrylic-type graft copolymers are commercially available, e.g., PARALOID™ KM 334 and KM 355 modifiers from Rohm and Haas Company.

In a third preferred embodiment, the substrate comprises repeating units derived from one or more conjugated diene monomers and, optionally, may further comprise repeating units derived from one or more monomers selected from (C₁-C₁₂)alkyl (meth)acrylate monomers and vinyl aromatic, and the superstrate comprises repeating units derived from a one or more (C₁-C₁₂)alkyl (meth)acrylate monomers and, optionally, may further comprise repeating units derived from one or more monomers selected from vinyl aromatic monomers, such as, e.g., a methacrylate-butadiene-styrene ("MBS") graft copolymers. The superstrate may be in the form of Suitable MBS-type graft copolymers are commercially available, e.g., PARALOID™ BTA-733 and BTA-753 modifiers from Rohm and Haas Company, Kane Ace B-56 from Kaneka Texas.

The thermoplastic elastomer composition of the present invention is made, e.g., by melt mixing the components, e.g., in a two-roll mill, in a Banbury mixer or in a single screw or twin-screw compounder with kneading elements.

The composition of the present invention may optionally include other additives known in the art, such as, e.g., other impact modifiers in addition to the high rubber graft copolymer, fillers, pigments, dyes, colorants, flame retardants, antistatic agents, plasticizers, lubricants, antioxidants, ultraviolet stabilizers, thermal stabilizers and costabilizers.

The materials described in the invention can be molded into useful articles by a variety of means such as injection molding, extrusion into profiles or sheets, calendering, rotation molding, blow molding. The composition of the present invention is particularly well suited for application requiring low hardness and high elongation in articles such as, e.g., gasketing and shoe soles. The superior weatherability of those embodiments of the present invention wherein the rubbery polymeric substrate of the graft copolvmer is substantially completely saturated, e.g., an ASA-type graft copolymer, allow them to be advantageously used in applications wherein prolonged exposure to an exterior environment is expected, such as, e.g., in gasket applications for doors and windows in the automotive and construction areas.

### EXAMPLES 1-11

The compositions of Examples 1-11 were prepared by blending of powdered CPE and ASA resins in a high intensity mixer. CPE resin was premixed first with stabilizers and lubricant and then ASA modifier resin was added. Then the powder blends were melt mixed by milling for five minutes at 340°F on laboratory two-roll mill. About 500 grams of each blend was prepared. Samples for physical testing having 0.125 inch thickness were pressed at 345°F. The following materials were used in the relative amounts set forth below in Table 1:
- "CPE 1": TYRIN™3615 chlorinated polyethylene resin, high molecular weight with 36% chlorine (Dow Chemical Company);
- "ASA 1": styrene-acrylonitrile copolymer superstrate grafted onto butyl acrylate rubber (35 wt% rubber);
- "ASA 2": styrene-acrylonitrile copolymer superstrate grafted onto acrylic rubber (68 wt% rubber);
- "ASA 3": styrene-acrylonitrile copolymer superstrate grafted onto butyl acrylate rubber (60 wt% rubber);
- "ACRYLIC": PARALOID™ KM334 acrylic "core-shell" copolymer (Rohm and Haas Company);
- "TiO₂": titanium dioxide, and
- "PE/EPDM": SANTOPRENE™ polypropylene/EPDM blend thermoplastic elastomer (Advanced Elastomer System, L.P).

Each of the compositions of Examples 1-11 also included 0.19 pbw Synpro™ 24-46-calcium stearate (Synthetic Products), 0.23 pbw Synpro™ GP-zinc stearate (Synthetic Products), 0.35 pbw Weston™ DPDP-Diphenyl isodecyl phosphite (GE Specialty Chemicals) and 2.5 pbw Drapex™ 6.8-epoxidized soybean oil costabilizer (Argus Division of Witco).

The following tests were conducted to characterize the compositions of Examples 1 11:
(i) tensile strength properties were tested according to ASTM D412 using an Instron test machine (crosshead speed 20 inches/min) and reported as pounds force per square inch ("psi");
(ii) tear strength properties were tested according to ASTM D624 using Die "C" and an Instron test machine and reported as pounds force per linear inch ("lb/ in.");
(iii) hardness testing of the blends was tested according to ASTM D2240-86 and reported as Shore A hardness and Shore D hardness; and
(iv) capillary viscosity was measured at 200°C and shear rates 100, 1000, 2000 1/sec, using a Galaxy V Rheometer from Kayeness, Inc., expressed in Poise.

The relative composition of each of the compositions of Examples 1-13 a, expressed in parts by weight, and the results of the testing are summarized below in TABLE 1.

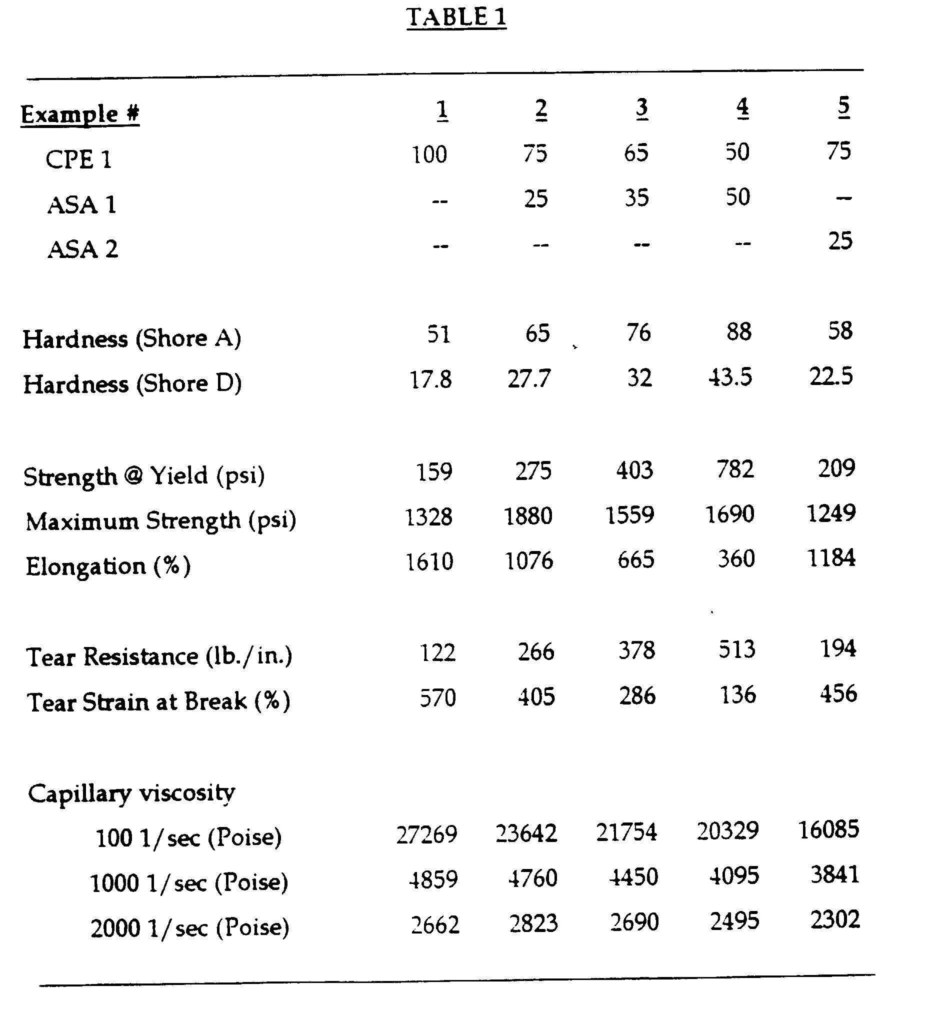

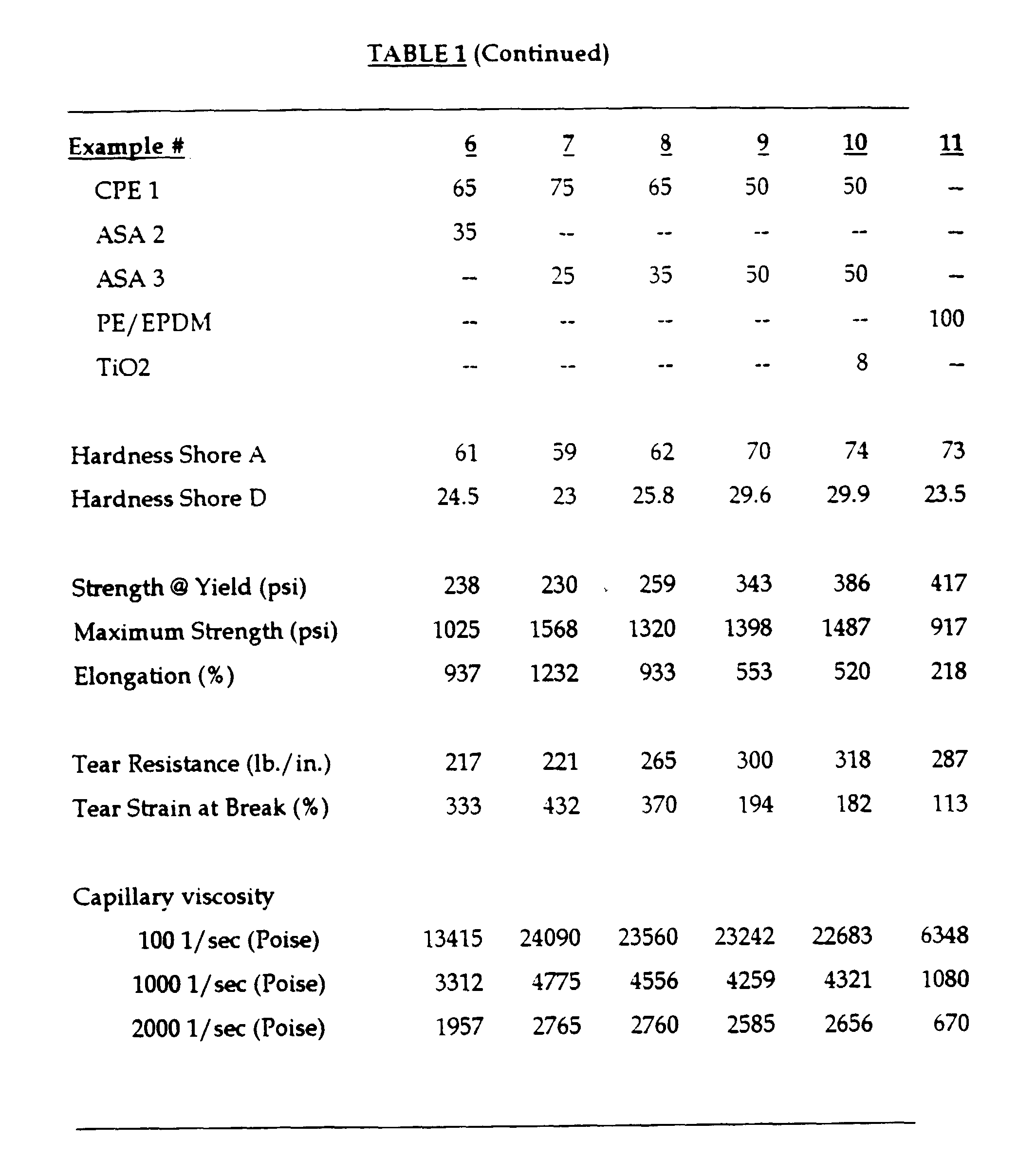

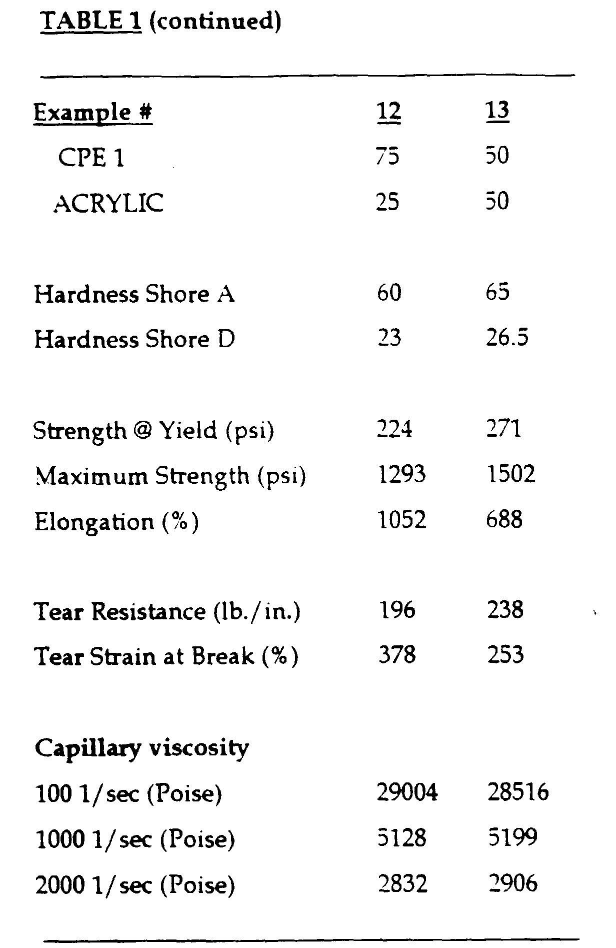

### EXAMPLES 14-20

The compositions of Examples 14-20 were made by the technique discussed above in regard to the compositions of Examples 1-13. The following materials were used:
- "CPE 1": TYRIN™3615 chlorinated polyethylene resin, high molecular weight with 36% chlorine (Dow Chemical Company);
- "MBS1": KANE ACE™B-56 MBS graft copolymer (Kaneka Texas);
- "MBS2": PARALOID™ BTA 751 MBS graft copolymer (Rohm and Haas Company);
- "MBS3": PARALOID™ BTA 733 MBS graft copolymer (Rohm and Haas Company).

Each of the compositions of Examples 14-20 also included 1.2 pbw stabilizer (Mark 3101S, Witco Corporation), 0.1 pbw antioxidant (IRGANOX ™ 1076, Ciba-Geigy), 0.25 pbw dilaurylthiodipropionate (DLTDP™ costabilizer, Argus Division of Witco Corporation) and 0.15 pbw oxidized polyethylene (AC316A, Allied Corporation).

The hardness, tensile properties and tear properties of the compositions of Examples 14-20 were measured by the methods set forth above in regard to the compositions of Examples 1-13.

The relative composition of each of the compositions of Examples 14-20, expressed in parts by weight, and the results of the testing are summarized below in TABLE 2.

**TABLE 2**

| **Example #** | **14** | **15** | **16** | **17** | **18** | **19** | **20** |
|---|---|---|---|---|---|---|---|
| CPE 1 | 100 | 75 | 50 | 30 | 75 | 50 | 50 |
| MBS1 | -- | 25 | 50 | 70 | -- | -- | -- |
| MBS2 | -- | -- | -- | -- | 25 | 50 | -- |
| MBS3 | -- | -- | -- | -- | -- | -- | 50 |
| | | | | | | | |
| Hardness Shore A | 52 | 60 | 72 | 76 | 61 | 70 | 66 |
| | | | | | | | |
| Tensile Strength (psi) | 1361 | 1343 | 1166 | 1119 | 1190 | 854 | 866 |
| Stress at yield | 148 | 215 | 277 | 534 | 189 | 206 | 202 |
| Tensile Elongation (%) | 1574 | 1081 | 576 | 397 | 1164 | 584 | 567 |
| | | | | | | | |
| Tear Strength (lb./in.) | 125.8 | 173.9 | 208.9 | 251.7 | 142.2 | 158.6 | 170.6 |
| Tear Strain at Break (%) | 924 | 477.7 | 196.9 | 148.5 | 391.2 | 164.2 | 253.3 |

The thermoplastic elastomer composition of the present invention exhibits improved elastomeric properties such as good strain recovery, improved tensile and tear strength and increased abrasion resistance over CPE alone.

## Claims

1. A thermoplastic elastomer composition, comprising:
from 10 to 90 percent by weight of a thermoplastic resin comprising one or more chlorinated thermoplastic resins selected from chlorinated polyolefin resins and chlorosulfonated polyolefin resins; and
from 10 to 90 percent by weight of one or more high rubber graft copolymers selected from:
(1) graft copolymer A, said graft copolvmer A comprising:
(a)(i) from 60 percent by weight to 95 percent by weight of a rubbery polymeric substrate having a glass transition temperature of less than 0°C and comprising repeating units derived from one or more conjugated diene monomers; and
(a)(ii) from 5 percent by weight to 40 percent by weight of a rigid polymeric superstrate having a glass transition temperature of greater than or equal to 0 °C and comprising repeating units derived from one or more (C₁-C₁₂)alkyl (meth)acrylate monomers, wherein at least a portion of the rigid polymeric superstrate is grafted to the rubbery polymeric substrate; or
(2) graft copolymer B, said graft copolymer B comprising:
(b)(i) from 60 percent by weight to 95 percent by weight of a rubbery polymeric substrate having a glass transition temperature of less than 0°C and having repeating units derived from one or more (C₁-C₁₂)alkyl acrylate monomers; and
(b)(ii) from 5 percent by weight to 40 percent by weight of a rigid polymeric superstrate having a glass transition temperature of greater than or equal to 0 °C and comprising repeating units derived from one or more monomers selected from the group consisting of (C₁-C₁₂)alkyl (meth)acrylate monomers, vinyl aromatic monomers and monoethylenically unsaturated nitrile monomers, wherein at least a portion of the rigid polymeric superstrate is grafted to the rubbery polymeric substrate.

2. The composition of claim 1, wherein the thermoplastic resin has a chlorine content of from 5 percent by weight to 55 percent by weight chlorine, chlorine, based on the total weight of resin.

3. The composition of claim 1, wherein the thermoplastic resin is a chlorinated polyethylene resin.

4. The composition of claim 1, wherein the substrate comprises repeating units derived from one or more (C₁-C₁₂)alkyl acrylate monomers and the superstrate compnses repeating units derived from one or more monomers selected from vinyl aromatic monomers and nitrile monomers.

5. The composition of claim 4, wherein the substrate comprises repeating units denved from butyl acrylate and the superstrate comprises first repeating units derived from styrene and second repeating units derived from acrylonitrile.

6. The composition of claim 1, wherein the substrate comprises repeating units derived from one or more (C₁-C₁₂)alkyl acrylate monomers and the superstrate comprises repeating units derived from one or more (C₁-C₁₂)alkyl(meth)acrylate monomers.

7. The composition of claim 6, wherein the substrate comprises repeating units derived from butyl acrylate and the superstrate comprises repeating units derived from methyl methacrylate.

8. The composition of claim 1, wherein the substrate comprises repeating units derived from one or more conjugated diene monomers and the superstrate comprises repeating units derived from one or more (C₁-C₁₂)alkyl (meth)acrylate monomers.

9. The composition of claim 8, wherein the substrate further comprises repeating units derived from one or more monomers selected from vinyl aromatic monomers and ethylenically unsaturated nitrile monomers.

10. The composition of claim 8 or claim 9, wherein the substrate comprises repeating units derived from butadiene and the superstrate comprises first repeating units derived from methyl methacrylate and second repeating units derived from styrene.
